# EUROPEAN PATENT APPLICATION

(11) **EP 0 807 776 A1**
(43) Date of publication of application: **19.11.1997**
(21) Application number: 97850051.0
(22) Date of filing: 01.04.1997
(51) Int. Cl.: F16J 15/34, F04D 29/12

(54) **A seal housing**

(30) Priority: 15.05.1996 SE 9601866
(71) Applicant: ITT Flygt Aktiebolag, S-171 25 Solna (SE)
(72) Inventor: Fondelius, Johan, Stockholm (SE)
(74) Representative: Larsson, Sten

(57) **Abstract**

The invention concerns a seal housing for a mechanical seal device.

The latter is arranged within a cavity (6) provided with a spiral notch (11) at its mantle surface for feeding particles in the liquid in a direction away from the seal means (7).

## Description

The invention concerns a seal housing for a seal device, such as a mechanical face seal, arranged between the hydraulic part and the driving motor in a pump of the centrifugal type.

A conventional centrifugal pump comprises a driving unit, such as an electric motor and a pump housing connected via a driving shaft. In order to prevent the pumped medium from entering the electric motor via the shaft and cause damage, some sort of seal is arranged between the pump housing and the motor. A common seal is the so-called mechanical face seal which consists of a rotary and a stationary seal ring which are pressed towards each other by spring force.

A seal of this type is very effective as long as the two seal surfaces are even and undamaged. In order to secure a perfect sealing there is often used an arrangement consisting of two mechanical seals and an intermediate oil room. In this way one of the seals will always be lubricated and cooled by clean oil and the risk for damages is decreased.

The seal that is heading the pump housing, here called the lower seal, will however always be exposed to the pumped medium and damages can easily occur if the medium contains wearing particles. This is very common in mines and certain other industrial areas.

The lower seal is normally mounted in a cavity which has a cylindrical or conical form. If conical, the part with the longer diameter is heading the pump housing. This form has manufacturing reasons, but it is also based on the theory that particles that enter the cavity shall be thrown out again by centrifugal force. It turns out however, that pollutions are concentrated at the inner part of the cavity, where they may damage the seal surfaces as well as the cavity walls. This phenomenon also occurs in seal housings where the cavity has a cylinder formed shape.

The concentration of pollutions depends on the fact that rotation of the pumped medium generates secondary flows of such a nature that rotating surfaces obtain a radially outwards directed flow, while stationary surfaces obtain a radially inwards directed flow which is superposed the tangentially directed flow. Particles within the seal housing will be thrown outwards to the cylindrical or conical surface by centrifugal force, the boundary layer flow along that surface then directing particles within the seal housing towards the seal. The particles are not transported back to the pump impeller at the outlet of the seal housing as the backwards directed flow is weaker than the inwards directed flow and because of the fact that the centrifugal force again throws the particles towards the inwards directed boudary layer flow. The result is that particles that once have entered the seal housing will never leave it, but are concentrated in the inner part of the housing where they cause wear of the housing and the seal.

In order to diminish the risk for wear of the seal ring surfaces and tha seal housing, there have been attemps to change the flow pattern in the seal area. An example is shown in the US Pat No 4872690, where an additional means is mounted which turns the flow and thus sometimes solves the problems.

Another solution is shown in SE 930 3791-9 where a spiral formed notch in the seal cavity makes the particles to move in a direction away from the seal. The boundary layer flow still tries to bring the particles inwards and toward the seal, but the notch helps the centrifugal force to bring the particles out of the boundary layer flow and keep them within the notch.

The invention is a further development of the above mentioned solution which solves the problems in an effective way.

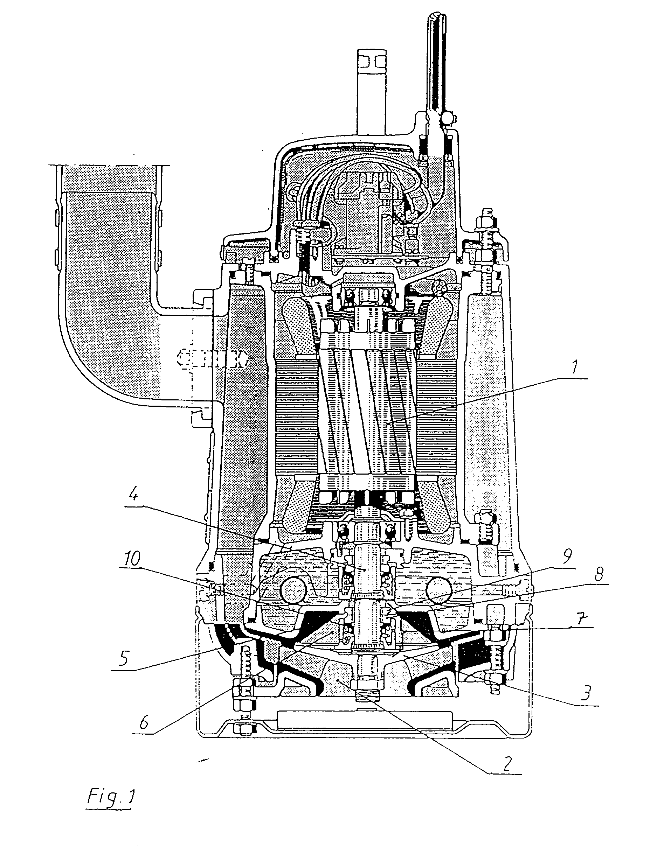

The invention is described more closely below with reference to the enclosed drawings of which Fig 1 shows a schematic cut through a centrifugal pump, Fig 2 shows a cut through a conventional seal cavity, Fig 3 a seal cavity according to the invention and Figs 4, 5 and 6 different embodiments of a notch or a shoulder in the wall of the cavity.

In the drawings 1 stands for a driving unit and 2 the hydraulic unit in a pump with a pump impeller 3 connected to the driving unit via a shaft 4, while 5 stands for an intermediate seal housing, 6 stands for a seal cavity with a mechanical seal 7. 8 and 9 stand for a rotary and a stationary seal ring respectively. 10 spring means, 11 a notch or a shoulder on the mantle surface 12 of the cavity, 13 an insert part and 14 and 15 finally the bottom of said notch.

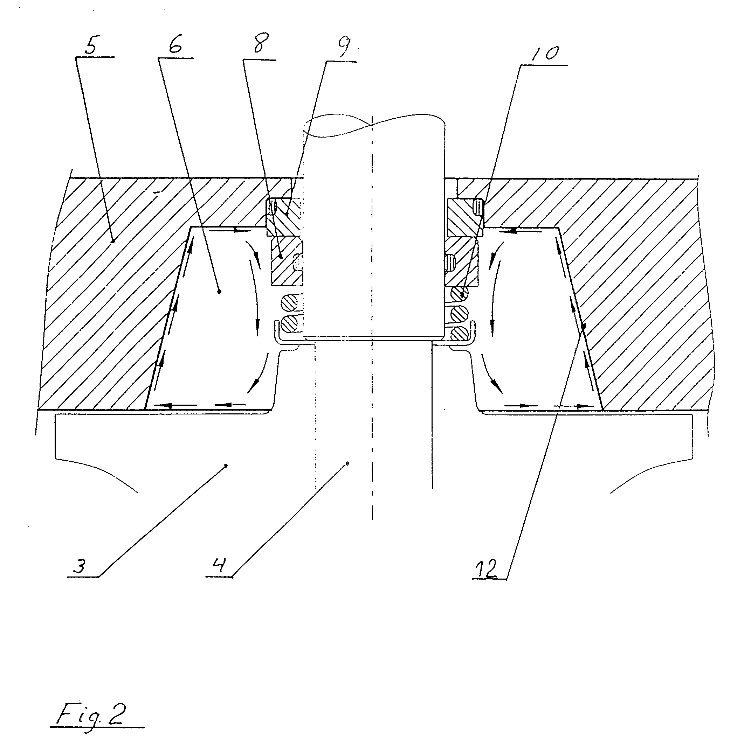

As is shown in Fig 2 the liquid goes in loops in the seal cavity which means that wearing particles stay within the cavity. This means that there is a great risk that the damages described above will occur very quickly.

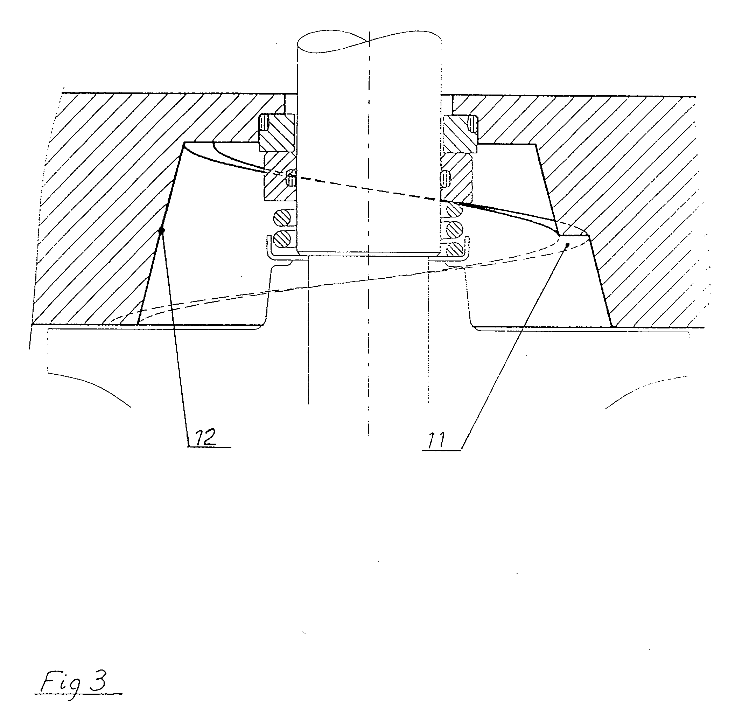

With reference to Fig 3 a device according to the invention is described. The cavity is designed with an increasing area in the direction of the pump impeller 3. The mantle surface is provided with a notch or a shoulder 11 which goes along the surface in an essentially spiral or helix pattern.

The particles that have entered the cavity 6 are transported by the boundary layer flow towards the bottom of the cavity. When the particles hit the notch or shoulder 11 they are forced by the boundary layer flows to move radially inwards to be able to pass the notch. By a suitable design of the notch said transport is prevented by centrifugal force. The particles will instead be caught by the pump impeller 3 where the centrifugal force will bring them away through the slot between pump impeller and seal housing.

The notch may have various inclinations and profiles and even several notches are possible within the scope of the invention.

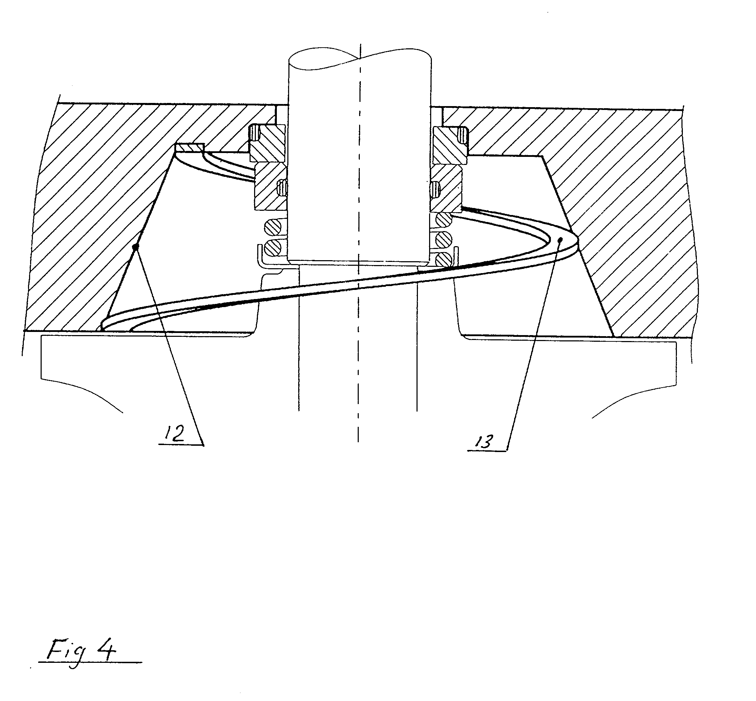

In Fig 4 is shown an embodiment where the notch or the shoulder 11 has a plane bottom 14 which has a radial inclination outwards and towards the pump impeller 3 which means that an acute angle is obtained between the bottom 14 and the mantle surface 12.

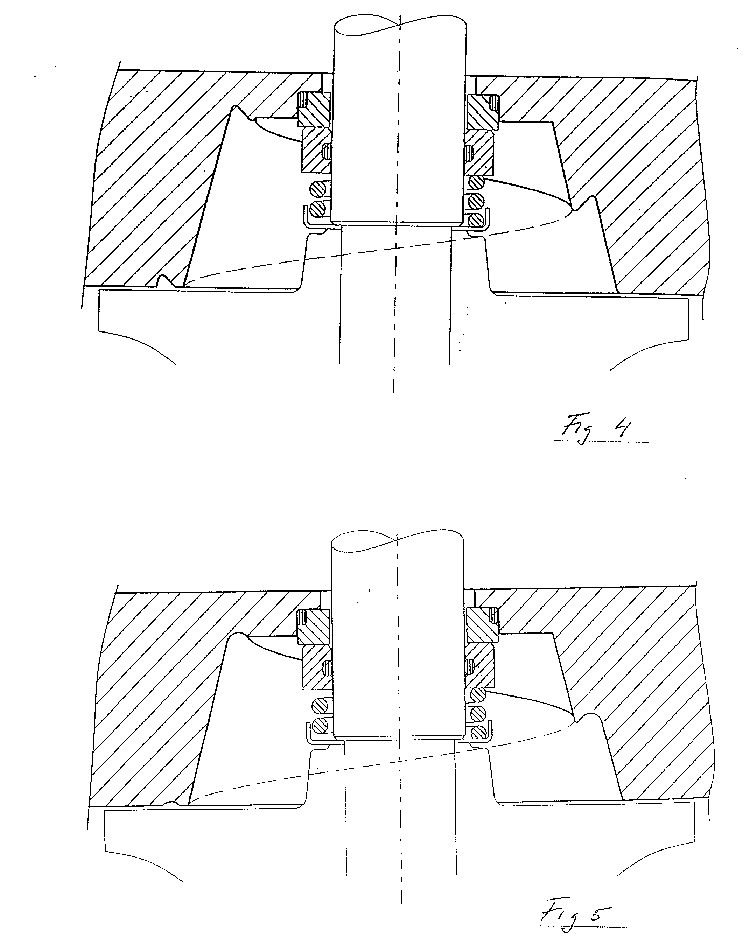

In Fig 5 is shown an embodiment where the notch or shoulder 11 is provided with a channel formed bottom which means that even here the transition between the notch and mantle surface shows an acute angle. Subject two embodiments secure the function even when the amount of pollutions is extremly high.

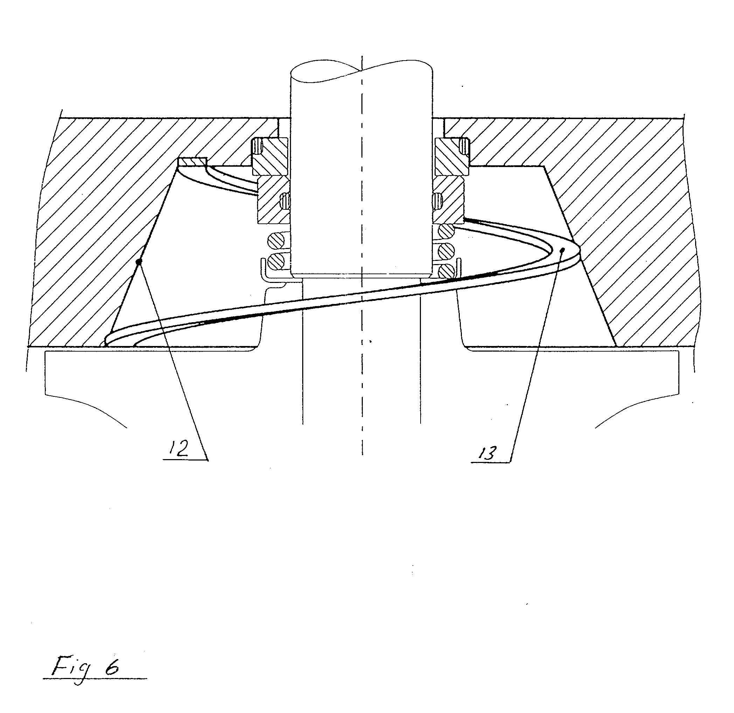

According to a special embodiment of the invention shown in Fig 6 the cavity has a plane mantle surface, the notch or shoulder being provided by a separate detail 13.

In the description the cavity is designed with an increasing area towards the pump impeller. This is to prefer for manufacturing reasons. The principale is however also valid for a cylinder formed cavity and even for a cavity having a decreasing area towards the pump impeller.

## Claims

1. A device at a seal housing for a rotary machine such as a pump or a mixer for liquids, which comprises a driving motor (1) a hydraulic part (2) with a rotary impeller (3) or propeller connected to the motor via a shaft (4) and a seal housing (5) between the motor and the hydraulic part which housing contains at least one seal such as a mechanical face seal arranged within a cavity (6) in the seal housing , said cavity (6), which is open towards the pump impeller (3) or the propeller, having a mantle surface (12) which is provided with at least one internal notch or shoulder (11) which goes along a part of or entire turns, the notch or shoulder (11) having such a winding direction that it winds itself towards the pump impeller 3 as seen in the rotation direction of the latter, characterized in that the notch or shoulder (11) is provided with a sloping bottom (14) and/or a channal formed bottom (15), the perpendicular versus said bottom being directed radically outwards and towards the pump impeller (3) in at least one point.

2. A device according to claim 1 characterized in that the transition between the notch or shoulder (11) and the mantle surface (12) is designed with an acute angle.

3. A device according to claim 1 characterized in that the cavity (6) has an increasing area in the direction of the pump impeller (3).

4. A device according to claim 1 characterized in that the cavity (6) has an decreasing area in the direction of the pump impeller (3).

5. A device according to claim 1 characterized in that the cavity (6) has a plane mantle surface and that the notch or the shoulder (11) is formed as an insert part (13).
